# EUROPÄISCHE PATENTANMELDUNG

(11) **EP 1 138 971 A2**
(43) Veröffentlichungstag der Anmeldung: **04.10.2001**
(21) Anmeldenummer: 01106601.6
(22) Anmeldetag: 15.03.2001
(51) Int. Cl.: F16D 65/21

(54) **Elektromechanische Bremsvorrichtung, insbesondere für ein Kraftfahrzeug**

(30) Priorität: 28.03.2000 DE 10015263
(71) Anmelder: SIEMENS AKTIENGESELLSCHAFT, 80333 München (DE)
(72) Erfinder: Doericht, Michael, 93138 Lappersdorf (DE); Mohr, Volker, 93138 Lappersdorf (DE); Schmid, Rainer, 93051 Regensburg (DE); Schmidhuber, Anita, 92421 Schwandorf (DE)

(57) **Zusammenfassung**

Zur fertigungs- und montagetechnischen Ergänzung einer elektromechanischen Betriebsbremse (EMB) mit einer redundanten Bremsvorrichtung ist eine mechanisch bedienbare Zusatzbremse (B), insbesondere eine Feststellbremse, im unbestromten Zustand der elektromechanischen Betriebsbremse über einen Freilauf (FW) an die Rotorwelle (RW) von deren Elektromotor (EM) bzw. an einen rotatorischen Teil, insbesondere Spindelmutter (SM), eines zwischen dem Elektromotor (EM) und dessen zugeordnetem Bremskolben (BK) vorgesehenen Spindeltriebs (SM;SW) ankoppelbar.

## Beschreibung

Die Erfindung bezieht sich auf eine elektromechanische Bremsvorrichtung, insbesondere für ein Kraftfahrzeug, gemäß Patentanspruch 1.

Bei beispielsweise durch die DE 196 15 186 C1 bzw. die DE 195 29 664 A1 bekannten elektromechanischen Bremsvorrichtungen wird die rotatorische Bewegung der Rotorwelle eines die Bremskraft erzeugenden Elektromotors über einen Spindeltrieb in eine translatorische Bewegung eines Bremskolbens umgesetzt, der bei Bestromung des Elektromotors Bremsbeläge gegen eine Bremsscheibe andrückt und dadurch ein Bremsmoment ausübt; im Antriebsstrang zwischen dem Elektromotor einerseits und dem Bremskolben andererseits, vorzugsweise zwischen dem bremsseitigen Abtrieb der Rotorwelle und dem elektromotorseitigen Antrieb des Spindeltriebs kann zur Vervielfältigung der translatorischen Bremskraft eine mechanische Übersetzung, insbesondere ein Getriebe, vorgesehen sein.

Bremsvorrichtungen der vorgenannten Art benötigen eine Notbremse, die bei Ausfall der elektrischen Energiequelle oder Störung im elektrischen System ein Abbremsen des Fahrzeugs ermöglichen. Durch die DE 34 10 006 C2 ist eine Bremsanlage für ein Straßenfahrzeug bekannt, die neben einer elektromechanischen Betriebsbremse ein zweites Bremssystem enthält; das zweite, auch als Feststellbremse einsetzbare, Bremssystem umfasst eine Hebeleinrichtung, mit der die Bremspedalkraft mechanisch über einen Seilzug auf die Radbremsen einer Achse des Fahrzeuges übertragbar ist.

Durch die JP 5-32 1961 A ist eine elektromechanische Bremsvorrichtung mit dem ersten Teilmerkmal des Anspruchs 1 bekannt, wobei als Feststell- bzw. Parkbremse die Rotation eines Bedienungshebels über eine Kurvenscheibenführung in eine axiale Beaufschlagung des ruhenden Rotors des Elektromotors sowie der ruhenden Spindelwelle und Spindelmutter umgesetzt wird.

Es ist weiterhin bekannt, ausgehend von einer Trommel-Betriebsbremse bei herkömmlichen hydraulisch mechanischen Feststellbremsen zwei Bremsbacken der hydraulischen Betriebsbremse mittels Zusatzeinrichtungen mechanisch gegen die Innenwand einer Bremstrommel anzudrücken; im Fall der DE 196 20 344 A1 bzw. der DE 39 41 400 C2 sind dazu die Bremsbacken zur Feststellbremsung in einer Bremsstellung durch elektrische Betätigung mechanisch verriegelbar. Ausgehend von einer ScheibenBetriebsbremse sind herkömmlich die Feststellbremsen als zusätzlich angebrachte Bremssättel realisiert, die von Hand über Seilzüge und Spannhebel gegen die Bremsscheibe gedrückt und in dieser Stellung arretierbar sind.

Gemäß Aufgabe vorliegender Erfindung soll mit geringem fertigungs- und montagetechnischen Aufwand bei nur kleinem Einbauraum eine Zusatzbremse geschaffen werden, die bei Stromausfall als redundante Sicherheitsbremse bzw. als Feststellbremse, insbesondere bei Anwendung in einem Kraftfahrzeug, einsetzbar ist.

Die Lösung der vorgenannten Aufgabe gelingt erfindungsgemäß durch eine elektromechanische Bremsvorrichtung gemäß Patentanspruch 1; vorteilhafte Ausgestaltungen der Erfindung sind jeweils Gegenstand der Unteransprüche

Bei der erfindungsgemäßen Bremsvorrichtung kann durch die einfache Freilaufankopplung an das freie Ende der Rotorwelle bzw. an einen rotatorischen Teil des Spindeltriebes ohne weitere Konstruktionsänderung der elektromechanischen Betriebsbremse unter Mitbenutzung von deren Aktuator-Bauteilen bei unterbrochener Stromversorgung eine Zusatzbremse als redundante Sicherheitsbremse bzw. als Feststellbremse aufwandsarm ergänzt werden; die Aktivierung der Feststellbremse erfolgt zweckmäßigerweise über einen hebelbedienbaren Seilzug mit entsprechender Hebelübersetzung, vorzugsweise derart dass nach Eingriff des Freilaufs durch eine Winkeldrehung der Rotorwelle bzw. des rotatorischen Teils des Spindeltriebs im Bereich des Verstellweges bei elektromechanischem Antrieb der Betriebsbremse ein einer Betriebsbremsung bei gleichem Verstellwinkel entsprechendes Bremsmoment gewährleistet ist.

Die Erfindung sowie weitere vorteilhafte Ausgestaltungen gemäß Merkmalen der Unteransprüche werden im folgenden anhand schematisch dargestellter Ausführungsbeispiele in der Zeichnung näher erläutert; darin zeigen:
- FIG 1: in Axialansicht eine erfindungsgemäße Bremsvorrichtung mit an das freie Ende der Rotorwelle des Elektromotors über einen Freilauf ankoppelbarer Zusatzbremse;
- FIG 2: in Axialansicht eine erfindungsgemäße Bremsvorrichtung mit an ein Rotationsteil des Spindeltriebs über einen Freilauf ankoppelbarer Zusatzbremse;
- FIG 3: in axialer Draufsicht auf das freie Ende der Rotorwelle des Elektromotors die Ankopplung der Zusatzbremse über einen Freilauf in Form eines Klemmrollenfreilaufs;
- FIG 4,5: in axialer Draufsicht auf das freie Ende der Rotorwelle des Elektromotors die Ankopplung der Zusatzbremse über einen Freilauf in Form eines ein- bzw. ausklingbaren Zahnmitnahmeeingriffs.

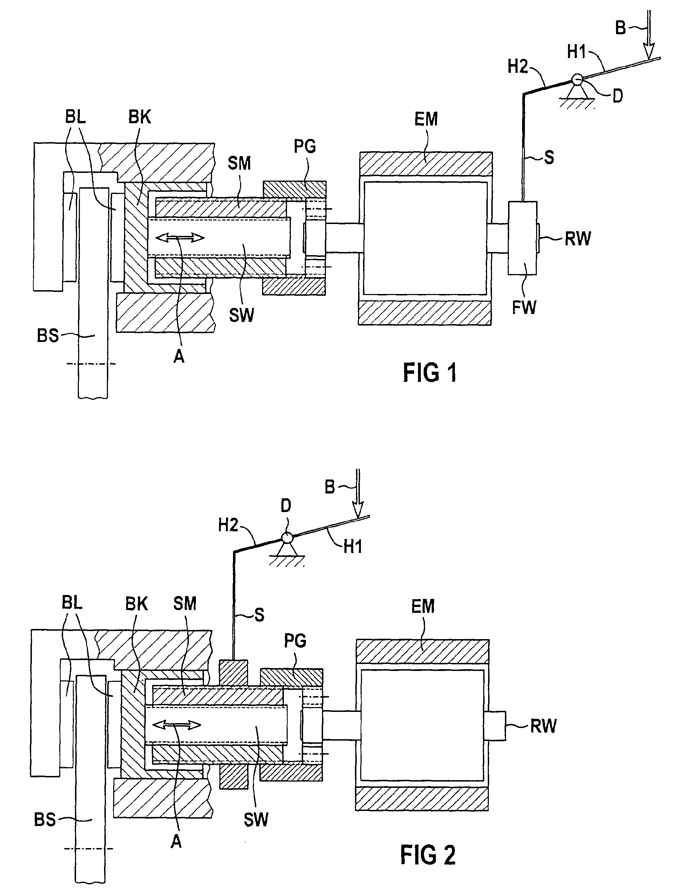

FIG 1,2 zeigen eine elektromechanische Bremsvorrichtung mit einem Elektromotor EM, dessen Rotorwelle RW über ein Planetengetriebe PG eine axial fixierte Spindelmutter SM als Teil eines Bremsaktuators antreibt; die Spindelmutter SM steht in Antriebsverbindung mit einer Spindelwelle SW, die bei Bestromung des Elektromotors EM die Rotationsbewegung von dessen Rotorwelle RW über das Planetengetriebe PG und die Spindelmutter SM in eine translatorische Bewegung in Achsrichtung A der Spindelwelle SW umsetzt; die Spindelwelle SW ist verbunden mit einem Bremskolben BK, der in hier nicht näher gezeigter, z.B. durch die eingangs zitierte DE 196 15 186 C1 bekannter Art, Bremsbeläge BL an eine Bremsscheibe BS, z.B. eines einem Rad eines Kraftfahrzeuges zugeordnetenen Bremsaktuators, andrücken und derart bei normalem Bremsbetrieb ein Bremsmoment an der Bremsscheibe BS erzeugen.

Gemäß FIG 1 ist an das rechte, dem Bremskolben BK abgewandte ansonsten freie Ende der Rotorwelle RW über einen Freilauf FW (free-wheeling) eine Zusatzbremse B ankoppelbar; die Zusatzbremse B ist nach einer Ausgestaltung der Erfindung als Seilzug-Hebel-Bremse derart ausgebildet, dass im Falle einer redundanten Bremsung bei Ausfall der elektromechanischen Betriebsbremse, z.B. wegen Stromausfall, oder im Fall einer Feststellbremsung bei Eingriff des Freilaufs, d.h. bei Mitnahmekopplung mit der Rotorwelle RW, eine Bremskraft in Pfeilrichtung über einen Bedienhebel H1;H2 mit einer Hebelübersetzung H1/H2 um einen Drehpunkt D unter Vermittlung eines Seilzuges S die Rotorwelle RW insbesondere maximal um einen solchen Drehwinkel verdreht, der einer Festbremsung bei normaler Betriebsbremsung entspricht.

FIG 2 zeigt in Abwandlung der Ausgestaltung gemäß FIG 1 eine Ankopplung der Zusatzbremse B an einen rotatorischen Teil, im vorliegenden Fall an die Spindelmutter SM, des Spindeltriebs SM;SW. In beiden Fällen sind in vorteilhafter Weise die Bremsaktuator-Bauteile der elektromechanischen Betriebsbremse mitverwendet und ist die Zusatzbremse mit einfachem Fertigungs- und Montageaufwand an den vorhandenen Bremsaktuator ankoppelbar.

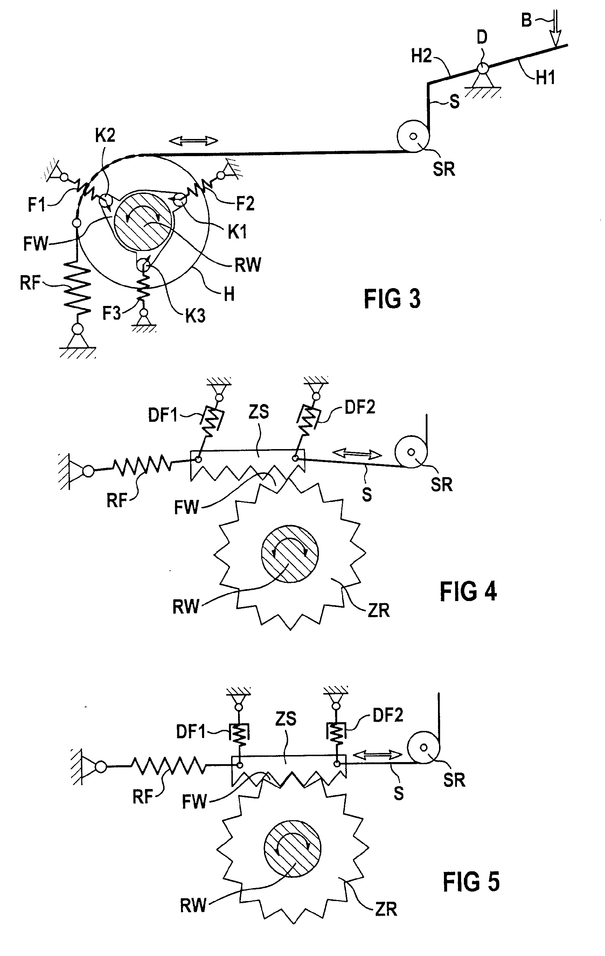

FIG 3 zeigt eine axiale Draufsicht auf das ansonsten freie Ende der Rotorwelle RW mit gemäß FIG 1 über einen Freilauf FW in Form eines Klemmrollenfreilaufs ankoppelbarer Zusatzbremse B mit Hebelübersetzung H2/H1 unter Vermittlung eines Seilzuges S.

Die durch einen Pfeil angedeutete Hebelkraft der Zusatzbremse B greift über die Hebelübersetzung H1/H2 mit dem Drehpunkt D über ein um eine Seilrolle SR umlenkbaren Seilzug S an eine die Rotorwelle RW umgreifende und über Klemmrollen K1-K3 in Klemmverschlusskammern mit dieser in kraftschlüssige Mitnahme bringbare Hülse H an.

Bei normaler elektromechanischer Betriebsbremsung werden die Klemmrollen K1-K3 mittels Zugfedern F1-F3 in den Klemmverschluss-Räumen zurückgehalten, derart dass eine freie Drehbeweglichkeit der Rotorwelle RW zu der umgebenden Hülse H gewährleistet ist.

Bei Betätigung der Zusatzbremse B wird über den Seilzug S - oder ein äquivalentes Gestänge - die Hülse H um einen bestimmten Winkel gedreht und werden die Klemmrollen K1-K3 in den verengten Raum der Klemmverschlusskammern bis zur kraftschlüssigen Mitnahme zwischen der Hülse H und der Rotorwelle RW mitgenommen.

Beim Wiederlösen der zuvor beschriebenen Klemmmitnahme wird durch Rückbewegung des Bedienhebels H1;H2 der Seilzug S zurückgenommen und die Hülse H, vorzugsweise mittels einer Rückholfeder RF, in ihre Ausgangslage mit dann außer Eingriff mit der Rotorwelle RW stehenden Klemmrollen K1-K3 zugrückbewegt; aufgrund der nicht selbsthemmenden Aktuatormechanik kann sich die Rotorwelle RW in eine Lösestellung zurückbewegen.

FIG 4,5 zeigen einen Freilauf in Form eines ein- bzw. ausklingbaren Zahnmitnahmeeingriffs; z.B. über einen, zuvor anhand von FIG 3 beschriebenen, Seilzug S ist eine Zahnstange ZS aus ihrer in FIG 4 angedeuteten, Lösestellung der Zusatzbremse B in ihre, in FIG 5 angedeutete Bremsstellung der Zusatzbremse B mit Einklingung in ein korrespondierendes, mit der Rotorwelle RW in Rotationsmitnahme stehendes Zahnrad ZR einklingbar und dadurch der Bremskolben BK aufgrund einer Winkeldrehung des Zahnrades ZR mit einem Bremshub beaufschlagbar. Dämpfungsfedern DF1;DF2 werden dabei aus einer Lösestellung gemäß FIG 4 in eine Andruckstellung gemäß FIG 5 bewegt.

Beim Wiederlösen der Zusatzbremse B durch entsprechende Freigabe des Seilzuges S wird die Zahnstange ZS über eine Rückholfeder RF unter Rückdrehung des Zahnrades ZR und damit der Rotowelle RW in ihre Ausklingstellung zum Zahnrad ZR gemäß FIG 4 zurückbewegt.

Anstelle einer ein- bzw. ausklingbaren Zahnpaarung ist nach einer weiteren Ausgestaltung eine ein- bzw. ausklingbare Gewindepaarungs-Mitnahme zwischen der Betätigung der Zusatzbremse, z.B. über den Seilzug S, und der Rotorwelle RW bzw. der Spindelmutter SM vorgesehen; im Fall einer Zusatzbrems-Ankopplung an die Spindelmutter SM bzw. der Spindelwelle SW kann in vorteilhafter Weise das an sich bereits vorhandene Spindelgewinde als ein Teil der ein- bzw. ausklingbaren Gewindepaarung der Zusatzbremse mitbenutzt werden.

## Patentansprüche

1. Elektromechanische Bremsvorrichtung, insbesondere für ein Kraftfahrzeug,
- mit einer elektromechanischen Betriebsbremse mit von der Rotorwelle (RW) eines Elektromotors (EM) über einen Spindeltrieb (SM;SW) in Achsrichtung (A) bewegbarem Bremskolben (BK);
- mit einer mechanisch betätigbaren, an die Rotorwelle (RW) des Elektromotors (EM) bzw. einen rotatorischen Antriebsteil des Spindeltriebs (SM;SW) im Sinne einer ansonsten elektromotorseitigen Winkeldrehung ankoppelbaren Zusatzbremse (B).

2. Elektromechanische Bremsvorrichtung nach Anspruch 1
- mit einer Ankopplung der Zusatzbremse (B) über einen Freilauf (FW) oder dergleichen im Sinne eines Bremseingriffs der Zusatzbremse (B) bei unbestromter elektromechanischer Betriebsbremse.

3. Elektromechanische Bremsvorrichtung nach Anspruch 1 und/oder 2
- mit einer Ausbildung der Zusatzbremse (B) als Feststellbremse.

4. Elektromechanische Bremsvorrichtung nach zumindest einem der Ansprüche 1-3
- mit einer Ausbildung der Zusatzbremse (B) als Redundant-Bremse, insbesondere bei Ausfall der Betriebsbremse.

5. Elektromechanische Bremsvorrichtung nach zumindest einem der Ansprüche 1-4
- mit einer Betätigung der Zusatzbremse (B) über einen Seilzug (S), insbesondere in Form einer Hebel-Seilzug-Betätigung (H1;H2;S).

6. Elektromechanische Bremsvorrichtung nach zumindest einem der Ansprüche 1-5
- mit einer Ausbildung des Freilaufs (FW) in Form eines Klemmrollen-Freilaufs (K1-K3).

7. Elektromechanische Bremsvorrichtung nach zumindest einem der Ansprüche 1-5
- mit einer Ausbildung des Freilaufs (FW) in Form eines ein- bzw. ausklingbaren Zahnmitnahmeneingriffs (ZS;ZR) bzw. Gewindemitnahmeeingriffs.
